(19) Europäisches Patentamt
European Patent Office
Office européen des brevets

(11) **EP 4 753 145 A1**

(12) **DEMANDE DE BREVET EUROPEEN**

(43) Date de publication:
**03.06.2026   Bulletin 2026/23**

(21) Numéro de dépôt: **25217869.4**

(22) Date de dépôt: **24.11.2025**

(51) Classification Internationale des Brevets (IPC):
**H02S 50/15** *(2014.01)*

(52) Classification Coopérative des Brevets (CPC):
**H02S 50/15**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **29.11.2024   FR 2413238**

(71) Demandeur: **Electricité de France**
**75008 Paris (FR)**

(72) Inventeurs:
- **ABDEL NOUR, Christine**
  **91400 SACLAY (FR)**
- **DUPUIS, Julien**
  **77590 BOIS-LE-ROI (FR)**

(74) Mandataire: **Regimbeau**
**20, rue de Chazelles**
**75847 Paris Cedex 17 (FR)**

(54) **PROCÉDÉ ET DISPOSITIF DE CARACTÉRISATION D'UN MODULE PHOTOVOLTAÏQUE**

(57)   Le présent exposé concerne un procédé de caractérisation d'un module photovoltaïque (M), au moyen d'un dispositif de caractérisation d'un module photovoltaïque (M), le dispositif de caractérisation comprenant une source lumineuse (S) de manière à éclairer un objet (M, R), un spectromètre (SP) comprenant un axe optique d'acquisition (BB) et un filtre polarisant (F) comprenant un axe de polarisation (CC) et disposé devant le spectromètre (SP), la lumière réfléchie par l'objet (M, R) passant par le filtre polarisant (F) pour être capturée ensuite par le spectromètre (SP), et une unité (U) de traitement (U).

[Fig. 1]

EP 4 753 145 A1

## Description

### DOMAINE TECHNIQUE

L'invention concerne un procédé de caractérisation de module photovoltaïque, pour évaluer ses performances de manière quantitative, ou pour identifier d'éventuels défauts du module de manière non destructive. En particulier, l'invention vise à évaluer la dégradation de la couche anti-reflet d'un module photovoltaïque.

### ETAT DE LA TECHNIQUE

La réflexion de la surface d'un module photovoltaïque doit être la plus faible possible pour maximiser la transmission de la lumière dans le module et assurer la conversion photovoltaïque. Pour cela, la surface avant des modules photovoltaïques est pratiquement toujours équipée d'une couche antireflet (CAR).

Cette couche antireflet est une mince couche de revêtement appliquée sur le verre des modules photovoltaïques pour minimiser la réflexion de la lumière incidente. Cette réduction permet d'augmenter la quantité de lumière capturée par le module, augmentant ainsi son rendement global.

Le principe de fonctionnement de la couche antireflet est basé sur le phénomène de l'interférence de rayons réfléchis entre le verre et la couche antireflet. Dans la très large majorité des cas, les modules ont une couche de verre pour assurer leur résistance mécanique et rigidité. La couche antireflet est principalement déposée par-dessus et l'épaisseur et indice de réfraction idéale sont calculés de façon à garantir l'interférence destructive entre le rayon transmis par la couche antireflet et réfléchi par le verre et un deuxième rayon transmis par la couche antireflet. Les réflexions entre les autres couches du module sont considérées négligeables. L'idée consiste à ce que, pour une longueur d'onde donnée, l'onde transmise par la couche antireflet et réfléchie par le verre retrouve une onde de phase opposée à la frontière entre l'air et la couche antireflet à la condition que l'épaisseur d soit égale à un quart de la longueur d'onde, faisant un chemin optique d'une demi-phase et donc arrivant avec une phase opposée à l'interface. La partie « détruite » est absorbée par le matériel et contribue à l'augmentation de l'efficacité du panneau. L'indice de réfraction idéal est donné par $n = \sqrt{n_{verre} n_{air}}$. Typiquement, un module sans couche antireflet réfléchit 4% de la lumière utile reçue et un module doté d'une CAR réfléchit 1%.

Cette couche ne mesure que quelques dizaines de nanomètres et est soumise aux conditions extérieures durant la vie du module photovoltaïque. Selon le lieu d'implantation, sa durée de vie peut être très courte (abrasion liée à des tempêtes de sable par exemple) ou équivalente à la durée de vie des modules photovoltaïques (plus de 30 ans).

Pour évaluer les performances d'un module photovoltaïque il convient d'estimer la dégradation de cette couche antireflet. En effet, la détérioration complète de cette couche antireflet introduit une perte de la puissance nominale du module. Les causes de cet endommagement dépendent de plusieurs facteurs comme les conditions climatiques du lieu, le nettoyage et la technologie de la couche en soi. Par exemple, le nettoyage, robotisé ou pas, des modules solaires en centrale peut abîmer la CAR s'il est fait de manière agressive.

Il existe un besoin à quantifier la tenue des couches antireflet face aux méthodes de nettoyage. Cette étude devient particulièrement pertinente dans des régions désertiques où les tempêtes de sable rendent la question du nettoyage très importante.

La quantification et l'analyse des causes de dégradation du revêtement de la couche antireflet n'est pas simple à faire sur site, car il est très difficile de séparer la perte de puissance générée par l'endommagement des couches anti-reflet des autres causes de dégradation.

En plus, l'abrasion de la couche antireflet peut se produire physiquement, c'est-à-dire qu'elle peut être rayée, mais sans affecter la transmission totale de la lumière ni la performance du module. Il faut donc un moyen de contrôler sa composition ou sa réflectivité pour identifier les mécanismes de vieillissement et si possible détérioration.

Un problème est que ces tests sont habituellement conduits en laboratoire à l'échelle de la cellule photovoltaïque et nécessitent de prélever un échantillon du module, ce qui détruit le module.

### EXPOSE GENERAL

Un but du présent exposé est de caractériser un module photovoltaïque en caractérisant sa couche antireflet de manière non destructive.

Il est à cet effet proposé, selon un aspect du présent exposé, un procédé de caractérisation d'un module photovoltaïque, au moyen d'un dispositif de caractérisation d'un module photovoltaïque, le dispositif de caractérisation comprenant une source lumineuse de manière à éclairer un objet, un spectromètre comprenant un axe optique d'acquisition et un filtre polarisant comprenant un axe de polarisation et disposé devant le spectromètre, la lumière réfléchie par l'objet passant par le filtre polarisant pour être capturée ensuite par le spectromètre, et une unité de traitement, le dispositif comprenant

une première configuration dans lequel l'axe optique du filtre polarisant forme un angle nul avec l'axe optique du spectromètre,
une deuxième configuration dans lequel l'axe optique du filtre polarisant est perpendiculaire à l'axe optique du spectromètre,
le procédé comprenant les étapes suivantes mises en œuvre par l'unité de traitement :

a) acquisition, dans la première configuration et dans la deuxième configuration respectivement d'une intensité réfléchie par un module photovoltaïque éclairé par la source lumineuse et mesurée par le spectromètre ;
b) acquisition, dans la première configuration et dans la deuxième configuration respectivement d'une intensité réfléchie par un réflecteur de référence et mesurée par le spectromètre ;
c) calcul au moyen d'une relation entre les intensités acquises dans chaque configuration d'une partie spéculaire de l'intensité diffusée par le module photovoltaïque et d'une partie spéculaire de l'intensité diffusée par le réflecteur de référence ;
d) calcul au moyen d'une relation entre la partie spéculaire de l'intensité diffusée par le module photovoltaïque, la partie spéculaire de l'intensité diffusée par le réflecteur de référence, et d'une réflectivité spectrale de référence du réflecteur de référence d'une réflectivité spectrale du module photovoltaïque, la réflectivité spectrale du module photovoltaïque étant caractéristique d'un état d'usure du module photovoltaïque.

L'invention est avantageusement complétée par les caractéristiques suivantes, prises seules ou en une quelconque de leur combinaison techniquement possible :

- A l'étape d) la réflectivité spectrale du module photovoltaïque est obtenue par le produit entre le ratio entre la partie spéculaire de l'intensité diffusée par le module photovoltaïque et l'intensité diffusée par le réflecteur de référence et la réflectivité spectrale du réflecteur de référence.
- la source lumineuse comprend une source principale à l'infini non polarisée et un filtre polarisant amont configuré pour polariser la source principale (S1), la source lumineuse éclairant le module photovoltaïque et le réflecteur de référence étant polarisée, à l'étape c) la partie spéculaire $I_{s\,module}$ de l'intensité diffusée par le module photovoltaïque est obtenue par $I_{s\,module} = I_2 - I_1$ et la partie spéculaire $I_{s\,ref}$ diffusée par le réflecteur de référence est obtenue au moyen de la relation $I_{s\,ref} = I_4 - I_3$, $I_1$ et $I_3$ étant les intensités acquises dans la première configuration, $I_2$ et $I_4$ étant les intensités acquises dans la deuxième configuration.
- La source lumineuse comprend une source principale à l'infini non polarisée, à l'étape c) la partie spéculaire $I_{s\;module,np}$ de l'intensité diffusée par le module photovoltaïque est obtenue par

$$I_{s\,module,np} = (I_2 - I_1).\frac{F_{\|}+F_{\perp}}{F_{\|}-F_{\perp}}$$ et la partie spéculaire $I_{s\,ref,np}$ diffusée par le réflecteur de référence est obtenue au moyen de la relation $I_{s\,ref,np} = (I_4 - I_3).\frac{F_{\|}+F_{\perp}}{F_{\|}-F_{\perp}}$ avec $F_{\|} = \left|\frac{n^2 cos(\Psi)-a}{n^2 cos(\Psi)+a}\right|$, $\Psi$ l'angle d'incidence sur le module photovoltaïque ou sur le réflecteur (R) de référence, $a = \sqrt{n^2 - sin^2(\Psi)}$ et $n$ est l'indice de réfraction du module (M) photovoltaïque ou du réflecteur (R) de référence, $I_1$ et $I_3$ étant les intensités acquises dans la première configuration, $I_2$ et $I_4$ étant les intensités acquises dans la deuxième configuration.

La source lumineuse est positionnée par rapport au module photovoltaïque et par rapport au réflecteur de référence avec un angle d'incidence $\Psi$ de la source inférieur ou égal à 15° par rapport à la normale avec le module ou réflecteur de référence.

- Entre l'étape a) et b), le procédé comprend a1) une étape de positionnement d'un réflecteur de référence sur le module photovoltaïque de sorte à être éclairé comme le module photovoltaïque à l'étape a), le réflecteur étant centré sur un point de mesure localisé sur le module photovoltaïque, la source lumineuse comprenant un axe optique passant par ce point.

Selon un deuxième aspect, l'invention concerne un dispositif de caractérisation d'un module photovoltaïque comprenant une source lumineuse de manière à éclairer un objet, un spectromètre comprenant un axe optique d'acquisition et un filtre polarisant comprenant un axe de polarisation et disposé devant le spectromètre, la lumière réfléchie par l'objet passant par le filtre polarisant pour être capturée ensuite par le spectromètre, et une unité de traitement, le dispositif comprenant

- une première configuration dans laquelle l'axe optique forme un angle nul avec l'axe optique du spectromètre,
- une deuxième configuration dans laquelle l'axe optique est perpendiculaire à l'axe optique du spectromètre, les deuxième et quatrième intensités étant acquises dans la deuxième configuration, l'unité de traitement étant configurée pour mettre en œuvre les étapes a), b) c) et d) du procédé selon l'une des revendications précédentes.

DESCRIPTION DES FIGURES

D'autres caractéristiques, buts et avantages ressortiront de la description qui suit, qui est purement illustrative et non limitative, et qui doit être lue en regard des dessins annexés sur lesquels :

La figure 1 illustre un dispositif de caractérisation éclairant un module photovoltaïque selon un premier mode de réalisation de l'invention ;
La figure 2 illustre un dispositif de caractérisation éclairant un réflecteur de référence selon le premier mode de réalisation de l'invention ;
La figure 3 illustre un dispositif de caractérisation éclairant un module photovoltaïque selon un deuxième mode de réalisation de l'invention ;
La figure 4 illustre un dispositif de caractérisation éclairant un réflecteur de référence selon le deuxième mode de réalisation de l'invention ;
La figure 5 illustre un organigramme illustrant un procédé de caractérisation selon l'invention.
La figure 6 illustre des courbes de réflectivité obtenues au moyen de l'invention ;
La figure 7 illustre schématiquement la réflexion d'un rayon lumineux sur un milieu comprenant plusieurs interfaces ;
La figure 8 illustre l'effet d'un filtre polariseur sur une lumière non polarisée ;
La figure 9 illustre l'effet d'un filtre polariseur sur une lumière polarisée ;
La figure 10 illustre l'effet de la rugosité sur le type de réflexion : à gauche une surface rugueuse, à droite une surface lisse.

Sur l'ensemble des figures, les éléments similaires portent des références identiques.

DESCRIPTION DETAILLEE

*Dispositif de caractérisation d'un module photovoltaïque*

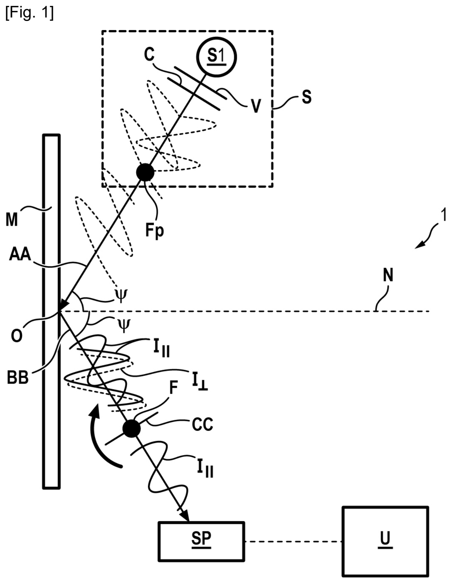

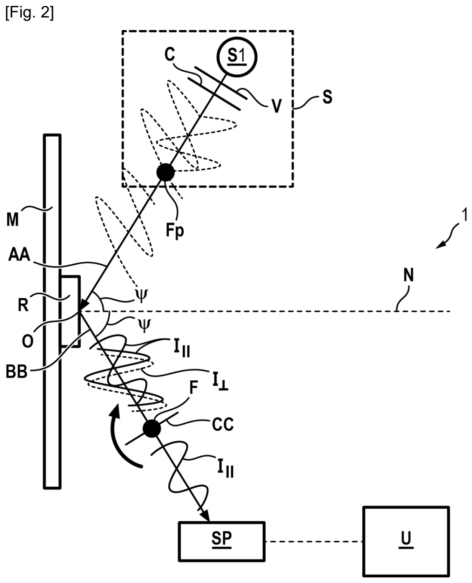

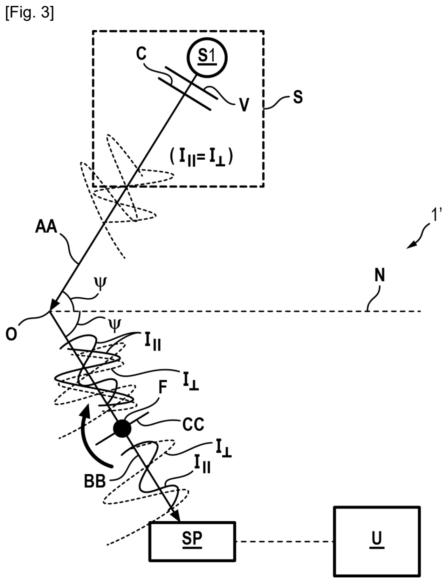

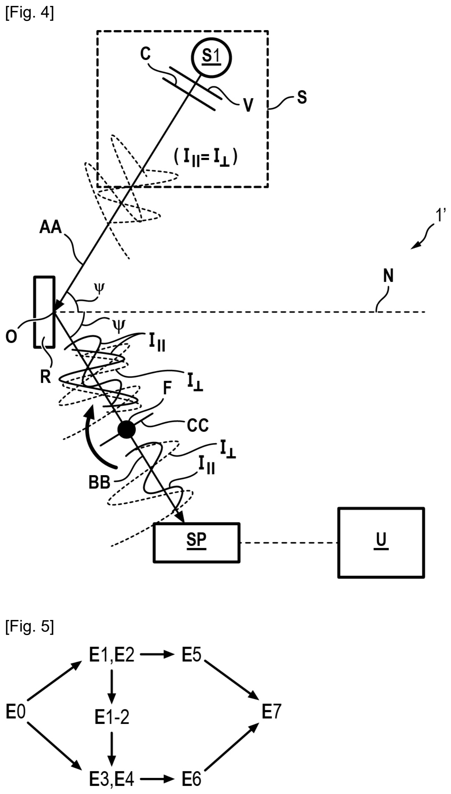

La figure 1 et la figure 2 illustrent un dispositif 1 de caractérisation d'un module photovoltaïque M selon un premier mode de réalisation et la figure 3 et la figure 4 illustrent un dispositif 1' de caractérisation d'un module photovoltaïque M selon un deuxième mode de réalisation. Le dispositif 1, 1' comprend à l'émission, une source lumineuse S comprenant un axe optique AA et à l'acquisition un spectromètre SP comprenant un axe optique BB et un filtre polarisant F comprenant un axe de polarisation CC. Le filtre polarisant F est circulaire et permet de placer son axe de polarisation CC perpendiculaire à l'axe optique BB du spectromètre SP ou bien dans l'axe optique BB du spectromètre SP.
De préférence la source lumineuse S comprend une source S1 à l'infini non polarisée.
La source lumineuse S permet d'éclairer tour à tour un module photovoltaïque M et un réflecteur de référence R pour effectuer différentes mesures comme il sera détaillé ci-après. A ce titre, un point de mesure O est défini sur le module M et le réflecteur R est centré sur ce point de mesure O. Les axes optiques AA, BB de la source lumineuse S1 et du spectromètre SP respectivement passent par ce point de mesure O.
La source S1 à l'infini est par exemple une lampe de type Halogène avec 1000 W et 26 000 lumens de puissance. Un verre V dépoli peut être placé devant la source S1 à l'infini pour rendre la lumière plus homogène spatialement. Un collimateur C permet de collimater le faisceau et l'orienter vers l'objet à éclairer M, R avec un angle normal à la surface de l'objet M, R. Le spectromètre SP est positionné de manière telle que l'axe optique AA de la source S et l'axe optique BB du spectromètre forment des angles identiques à la normale N à l'objet M, R à éclairer. Le spectromètre SP est positionné de manière à être proche de la source S. Par exemples, le spectromètre est un CS-2000 Konica Minolta™ capable de mesurer dans le spectre visible de 380 à 780nm. L'intensité mesurée est de façon connue donnée en $cd/m^2$ qui correspond à la luminance en Lv.
Le réflecteur de référence R est une référence STAN-SSL Specular Reflectance Standard de la marque Ocean Insight™ fait à partir du verre Schott ND9. Le réflecteur de référence présente une réflectivité spectrale de référence $R_{ref}$ de 5% entre 200 et 950nm et 4% entre 950 et 2500nm.
Un module M photovoltaïque est éclairé par la source S lumineuse selon un angle d'incidence $\psi$ par rapport à la normale N selon l'horizontale, mais toujours parallèle à la normale selon la verticale. Ceci permet de n'avoir qu'un seul angle de liberté entre le module photovoltaïque M et le rayon incident de manière à simplifier et enlever des potentielles sources d'incertitude dues à l'angle. Le spectromètre SP est de préférence positionné sur un trépied réglable de façon à recevoir le faisceau au même angle ψ. Cet angle ψ est au maximum de 15°, valeur déterminée par les inventeurs en dessous de laquelle la lumière diffuse n'est pas polarisée et les incertitudes de mesures sont moindres.

Selon le premier mode de réalisation, la source S est polarisée en ce qu'elle comprend un filtre polariseur Fp configuré pour polariser la source S1 à l'infini éclairant le module M ou le réflecteur R. Selon le deuxième mode de réalisation, la source S est non polarisée.

Le dispositif de caractérisation selon le premier ou le deuxième mode de réalisation est configuré pour être utilisé selon une première configuration et selon une deuxième configuration.

Selon la première configuration, le dispositif de caractérisation 1, 1' est tel que le filtre polarisant F devant le spectromètre SP a son axe de polarisation CC perpendiculaire à l'axe optique BB du spectromètre SP, un angle $\theta$ de polarisation entre l'axe CC et l'axe optique BB étant égal à 90°.

Selon la deuxième configuration, le dispositif de caractérisation 1, 1' est tel que le filtre polarisant F devant le spectromètre SP a son axe de polarisation CC selon l'axe optique BB du spectromètre SP, l'angle $\theta$ de polarisation étant nul.

Une unité de traitement U commande l'acquisition des intensités mesurées par le spectromètre et les reçoit en vue de leur traitement comme décrit ci-après.

*Procédé de caractérisation d'un module photovoltaïque*

La figure 5 illustre des étapes d'un procédé de caractérisation d'un module photovoltaïque.

Le module photovoltaïque est éclairé (étape E0) par la source S. L'axe optique AA de la source S est orienté vers un point de mesure O localisé sur le module M photovoltaïque. Le point de mesure O sur le module M photovoltaïque est, de préférence, positionné en évitant des doigts de sérigraphie avec l'aide des manettes de réglage du trépied le cas échéant et la mise au point du spectrophotomètre sur la surface du module photovoltaïque M est effectuée.

Dans la première configuration avec l'angle de polarisation nul $\theta$ = 0° du filtre polarisant FP, une première intensité réfléchie par le module M est acquise (étape E1).

Dans la deuxième configuration avec l'angle de polarisation θ = 90°, une deuxième intensité réfléchie par le module M est acquise (étape E2).

Le passage de la première à la deuxième configuration est effectué en tournant le filtre polarisant (étape E1-2).

Ensuite, il est procédé aux mêmes acquisitions mais avec un réflecteur R de référence qui est positionné tel que le point de mesure O utilisée pour le module M photovoltaïque soit au même endroit (étapes E3, E4).

Une troisième intensité réfléchie par le réflecteur R de référence est acquise dans la deuxième configuration (étape E3) et une quatrième intensité est acquise dans la première configuration (étape E4).

Ensuite en utilisant une relation (Equation 14 et Equation 17 ci-après) entre les intensités acquises dans les deux configurations, il est procédé au calcul d'une partie spéculaire de l'intensité diffusée par le module M photovoltaïque d'une part et au calcul d'une partie spéculaire de l'intensité diffusée par le réflecteur de référence.

Autrement dit il est procédé au calcul au moyen d'une relation (Equation 14 et Equation 17 ci-après)

- entre la première intensité $I_1$ et la deuxième intensité $I_2$ d'une partie spéculaire de l'intensité diffusée par le module M photovoltaïque ;
- entre la troisième intensité $I_3$ et la quatrième $I_4$ intensité d'une partie spéculaire de l'intensité diffusée par le réflecteur R de référence.

Puis au moyen d'une relation (Equation 1 ci-après) entre la partie spéculaire $Is_{module}$ de l'intensité diffusée par le module (M) photovoltaïque, la partie spéculaire $Is_{ref}$ de l'intensité diffusée par le réflecteur R de référence, et d'une réflectivité spectrale de référence du réflecteur de référence, il est procédé au calcul d'une réflectivité spectrale $R_{ref}(\lambda)$ du module M photovoltaïque avec $\lambda$ la longueur d'onde de l'intensité acquise par le spectromètre SP.

La réflectivité spectrale $R_{module}(\lambda)$ du module M photovoltaïque est obtenue par le produit entre le ratio entre la partie spéculaire de l'intensité diffusée par le module M photovoltaïque et l'intensité diffusée par le réflecteur de référence R et la réflectivité spectrale du réflecteur de référence R. La relation suivante donne l'équation de cette réflectivité :

$$R_{module}(\lambda) = \frac{Is_{module}}{Is_{ref}} R_{ref}(\lambda) \text{ (Equation 1)}$$

De la sorte, il est possible d'évaluer la réflectivité de la couche anti-reflet pour en évaluer sa détérioration. Cette détérioration peut être par exemple comparée à celle d'un module de référence, non exposé en extérieur, et dont la réflexion aura été mesurée dans les mêmes conditions. Elle peut aussi être comparée à des modules sans couche antireflet, mesurés avec la même méthode.

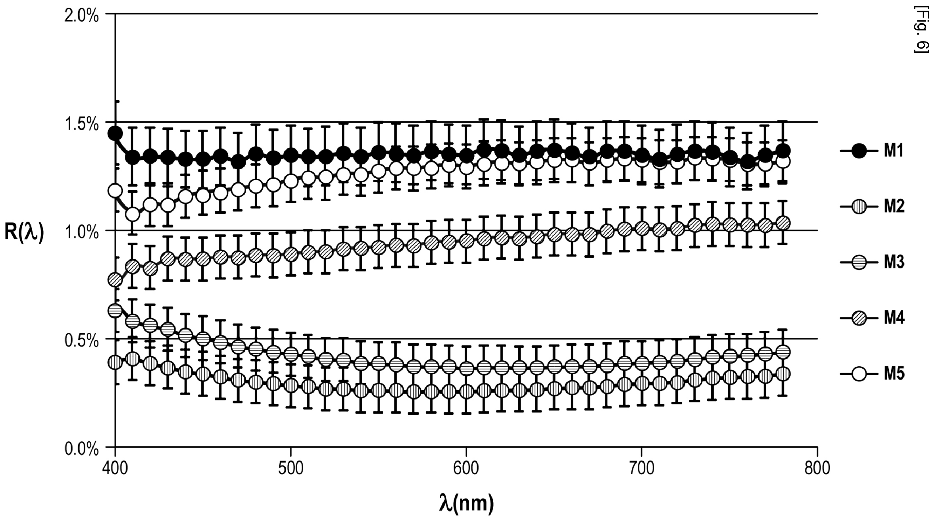

La figure 6 illustre une telle comparaison. Sur cette figure la réflectivité spectrale, c'est-à-dire la réflectivité des modules pour chaque longueur d'onde, ici de 400 nm à 780 nm (domaine du rayonnement visible), de plusieurs modules est mesurée selon la méthode ici décrite : un module de référence sans couche antireflet (courbe M1), un module de référence avec une couche antireflet (courbe M2), un module commercial neuf (courbe M3), un module commercial utilisé dans une centrale solaire dont la couche antireflet a été partiellement dégradée (courbe M4) et un module commercial utilisé dans une centrale solaire dont la couche antireflet a été totalement dégradée (courbe M5). Les mesures réalisées permettent de mettre en évidence le degré de dégradation des couches antireflet des modules commerciaux par rapport aux deux modules de référence.

De manière alternative, il est possible de quantifier la réflectivité globale plutôt que spectrale en intégrant la réflectivité spectrale sur celui du spectre solaire, la référence du spectre solaire étant prise en général de façon normative égale à celle du spectre 1.5G, définie comme l'irradiation spectrale du soleil sur une surface terrestre, avec une orientation et des conditions atmosphériques spécifiées à 1.5G selon le document normatif Reference Air Mass 1.5 Spectra de l'American Society for Testing and Materials (ASTM), spectre utilisé lors de la mesure de performance des modules photovoltaïques. Ainsi la pondération des mesures spectrales avec l'intensité du spectre solaire de référence permet de quantifier la réflexion des modules globale entre 400 et 780 nm :

M1 : 1,3%
M2 : 0,3%
M3 : 0,4%
M4 : 0,9%
M5 : 1,2%.

Selon un premier mode de réalisation, la source lumineuse S est polarisée en plaçant un filtre polariseur Fp devant la source à l'infini S1. Les figures 1 et 2 illustrent respectivement les première et deuxième configurations avec la source S polarisée. Sur ces figures, en pointillés sont représentés les rayons qui arrivent de la source lumineuse S et qui sont réfléchis avec le même angle d'incidence. C'est la réflexion spéculaire. En traits pleins sont représentés les rayons réfléchis de manière diffuse. La lumière spéculaire est polarisée à la sortie de la source lumineuse S1 par un filtre polariseur Fp, afin que seule la composante parallèle notée $I_\parallel$ soit réfléchie. La lumière diffuse en revanche n'est pas polarisée et donc ses deux composantes, parallèle et perpendiculaire notées sont réfléchies. Le polariseur tournant est placé devant le spectromètre.

La partie spéculaire $I_s$ module de l'intensité diffusée par le module (M) photovoltaïque est obtenue par $I_s$ module = $I_2$ - $I_1$ et la partie spéculaire $I_{s\,ref}$ diffusée par le réflecteur de référence est obtenue au moyen de la relation $I_{s\,ref}$ = $I_4$ - $I_3$, $I_1$ et $I_3$ étant les intensités acquises dans la première configuration, $I_2$ et $I_4$ étant les intensités acquises dans la deuxième configuration.

Selon un deuxième mode de réalisation, la source lumineuse S est non polarisée. Les figures 3 et 4 illustrent respectivement les première et deuxième configuration avec la source S non polarisée. Dans cas, la partie parallèle n'est plus coupée par le polariseur fixe et quand $\theta$ = 90°, on a l'incidence des parties parallèle et perpendiculaire du diffus et du spéculaire $I_\parallel$ $I_\perp$ et quant $\theta$ = 0°, il reste les parties parallèle $I_\parallel$ du diffus et du spéculaire

Selon ce deuxième mode de réalisation, la partie spéculaire $I_{s\,module,np}$ de l'intensité diffusée par le module M photovoltaïque est obtenue par $I_{s\,module,np} = (I_2 - I_1).\frac{F_\parallel + F_\perp}{F_\parallel - F_\perp}$ et la partie spéculaire $I_{s\,ref,np}$ diffusée par le réflecteur de référence est obtenue au moyen de la relation $I_{s\,ref,np} = (I_4 - I_3).\frac{F_\parallel + F_\perp}{F_\parallel - F_\perp}$ avec

$F_\parallel = \left| \frac{n^2 cos(\Psi) - a}{n^2 cos(\Psi) + a} \right|^2$, $\Psi$ l'angle d'incidence sur le module (M) photovoltaïque ou sur le réflecteur de référence R, $a = \sqrt{n^2 - sin^2(\Psi)}$ et $n$ est l'indice de réfraction du module (M) photovoltaïque ou du réflecteur de référence, $I_1$ et $I_3$ étant les intensités acquises dans la première configuration, $I_2$ et $I_4$ étant les intensités acquises dans la deuxième configuration.

*Equations détaillées*

### A. Réflexion, Réfraction, Absorption

La lumière incidente sur une surface a trois comportements possibles : la réflexion (R), la transmission (T) et l'absorption (A) où R + T + A = 1.

Pour les modules solaires, on cherche à optimiser la transmission de la lumière vers les cellules PV sur une gamme donnée de longueur d'onde. La loi de la réfraction, également connue sur le nom Loi de Snell-Descartes est présentée dans l'équation 3 où n est l'indice de réfraction et $\psi$ l'angle par rapport à la normale pour un rayon traversant un milieu 0 à 1. L'angle limite à partir duquel la réflexion est totale R = 1, T = 0 est donné dans l'équation 3 ci-dessous

$$\Psi_L = asin\left(\frac{n_0}{n_1}\right) \qquad \text{(Equation 2)}$$

$$n_0 sin\Psi_{incident} = n_1 sin\Psi_{réfléchi} \qquad \text{(Equation 3)}$$

Ici, il est possible de mesurer la réflexion de manière directe, T et A étant difficiles à atteindre.

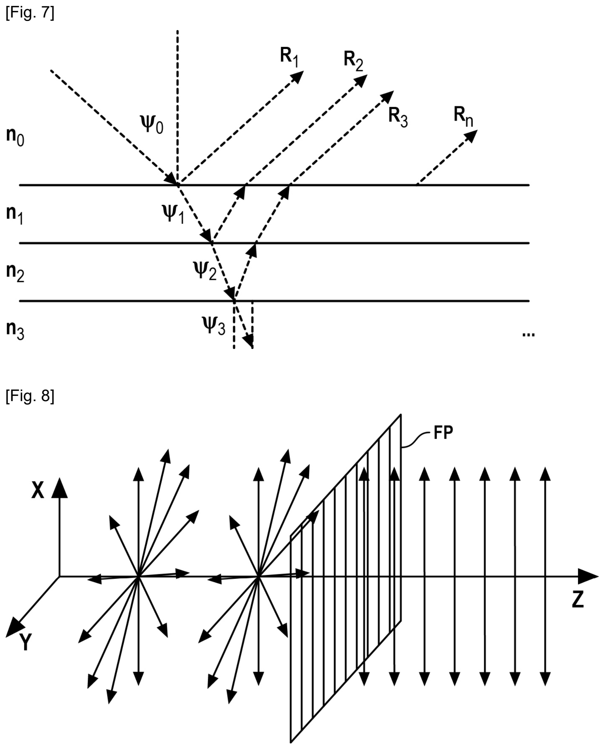

Dans les cas de modules photovoltaïques, on a une structure à plusieurs couches comme la montre la figure 7. La réflexion totale mesurée du module est une somme de la réflexion des n couches (R1, R2, R3, ..., Rn). Dans ce modèle, la réflexion intra-couches est négligée étant donnée sa faible contribution.

L'angle limite $\psi_{0L}$ pour avoir la réflexion totale de la couche antireflet et du verre R1 + R2 pour un $n_1$ variant de 1, 3 à 1, 5 et $n_2 = 1, 5$ est compris entre 40° et 50°. Ceci signifie que si on a un angle d'incidence $\psi_0 \geq 40°$ on ne mesurera pas la réflexion du module entier. Ceci permet de séparer la contribution de la couche antireflet.

### B. Coefficients de Fresnel

Les coefficients de Fresnel permettent de quantifier la manière avec laquelle la lumière est réfléchie et transmise à une interface entre deux milieux, en fonction de l'angle d'incidence et de la polarisation.

Leur démonstration repose sur l'application des équations de Maxwell, qui vont décrire le comportement des champs électrique et magnétique de la lumière. Les équations de Maxwell sont appliquées à chaque milieu, et les équations de propagation sont utilisées pour déterminer les champs électrique et magnétique incidents, réfléchis et transmis.

On suppose que la cellule solaire est homogène, isotrope et linéaire. On considère aussi dans un premier temps une lumière incidente non polarisée.

$$\vec{n}_{12} \wedge \left(\vec{E}_{im} + \vec{E}_{rm} - \vec{E}_{tm}\right) = \vec{0} \qquad \text{(Equation 4)}$$

$$\vec{n}_{12}.\left(\vec{B}_{im} + \vec{B}_{rm} - \vec{B}_{tm}\right) = 0 \qquad \text{(Equation 5)}$$

En appliquant des conditions aux limites, on arrive à un système linéaire qui donnent les coefficients de réflexion de la composante parallèle $F_{\parallel}$ et perpendiculaire $F_{\perp}$ car la lumière devient légèrement polarisée après la réflexion. Ces équations 6 et 7 sont en fonction de l'angle d'incidence $\psi i$, l'angle de réfraction $\psi t$, de l'indice de réfraction des milieux $n = n_1 / n_0$.

$$F_{\parallel}(\Psi_t, \Psi_i) = \frac{\tan(\Psi_t - \Psi_i)}{\tan(\Psi_t + \Psi_i)} \qquad \text{(Equation 6)}$$

$$F_{\perp}(\Psi_t, \Psi_i) = \frac{2\sin(\Psi_t)\cos(\Psi_i)}{\sin(\Psi_t + \Psi_i)\cos(\Psi_t - \Psi_i)} \qquad \text{(Equation 7)}$$

De manière connue, les coefficients de Fresnel sont normalement écrits en prenant en compte l'angle du rayon réfracté ($\Psi_t$) et l'incident ($\Psi_i$) (voir équations 8 et 9). Il s'agit de supprimer l'angle réfracté puisque étant dans un système multi-couches il est très difficile à mesurer.

On trouve aussi des expressions équivalentes pour les coefficients de Fresnel en fonction uniquement den et $\Psi$, l'angle d'incidence.

$$F_{\parallel}(n, \Psi) = \frac{a^2 - 2a sin\Psi tan\Psi + sin^2\Psi tan^2\Psi}{a^2 + a sin\Psi tan\Psi + sin^2\Psi tan^2\Psi} \; ; \; F_{\perp}(\eta, \Psi) = \left| \frac{n^2 cos(\Psi) - a}{n^2 cos(\Psi) + a} \right|^2$$

(Equation 8)

$$F_{\perp}(n, \Psi) = \frac{a^2 - 2a cos\Psi + cos^2\Psi}{a^2 + 2a cos\Psi + cos^2\Psi} = \left| \frac{n^2 cos(\Psi) - a}{n^2 cos(\Psi) + a} \right|^2$$

(Equation 9)

$$a = \sqrt{n^2 - sin^2(\Psi)}$$

(Equation 10)

C. Polariseurs

Un polariseur est un dispositif capable de contrôler la polarisation de la lumière en ne laissant passer que les composantes du champ électrique dans une direction donnée. Il existe plusieurs types de polariseurs (linéaire, circulaire, ellipsoïdal), mais le plus simple et le plus couramment utilisé est le polariseur linéaire.

La Loi de Malus (équation 11) donne le comportement du polariseur parfait où I est l'intensité lumineuse en sortie du polariseur et $I_0$ celle de départ. On note $\gamma$ l'angle que fait cette polarisation avec l'axe du polariseur.

$$I = I_0 \cos(\gamma) \text{ (Equation 11)}$$

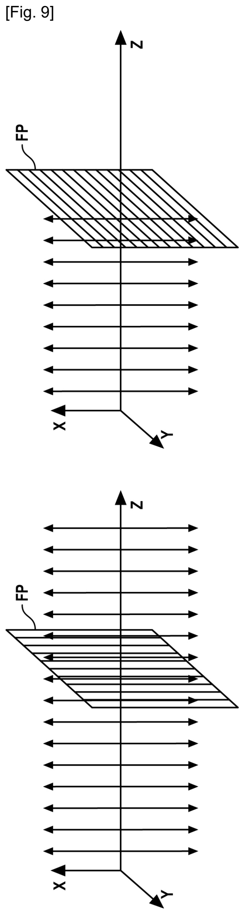

Si la lumière est non polarisée, le polariseur linéaire agira comme un atténuateur d'intensité. Il coupera selon cos (y) la partie parallèle et la partie perpendiculaire chacune égale pour la lumière non polarisée. La moitié de l'intensité originale sera donc atténuée si le polariseur est parfait. La figure 8 illustre l'effet d'un filtre polariseur sur une lumière non polarisée et la figure 9 illustre l'effet d'un filtre polariseur sur une lumière polarisée.

D. Lumière spéculaire et diffuse

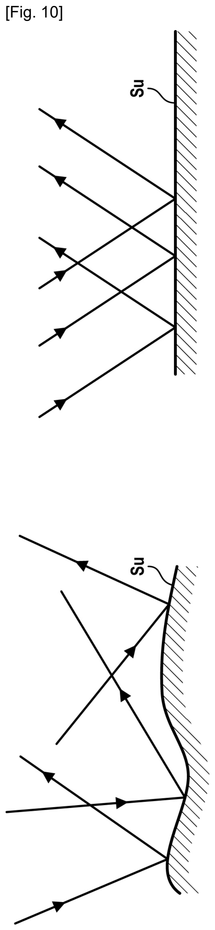

La lumière spéculaire correspond à la partie réfléchie avec le même angle d'incidence, aussi connu comme réflexion régulière et directe. Cependant, s'il y a des rugosités sur la surface ou des lumières incidentes à d'autres angles que celui de la source, on aura de la lumière diffuse réfléchie à des angles autres que $\psi$. La figure 10 illustre l'effet de la rugosité sur le type de réflexion : à gauche une surface rugueuse, à droite une surface lisse.

Dans l'invention il s'agit de ne prendre que la partie spéculaire de la lumière pour éviter une surestimation de la réflectance. De plus, la polarisation permet d'éliminer l'influence des lumières parasites.

*Premier mode de réalisation : Eclairage par lumière polarisée*

Comme indiqué précédemment, la lumière spéculaire est polarisée à la sortie de la source lumineuse S1 par un filtre polariseur Fp, afin que seule la composante parallèle notée $I_{\parallel}$ soit réfléchie. La lumière diffuse en revanche n'est pas polarisée et donc ses deux composantes, parallèle et perpendiculaire notées sont réfléchies. Le polariseur tournant est placé devant le spectromètre.

La Loi de Malus donne le comportement du polariseur parfait : pour l'onde spéculaire polarisée linéairement, l'intensité est en partie absorbée selon la relation en cos² et pour l'onde non polarisée l'intensité est réduite de moitié selon l'équation 12.

$$I(\theta) = \frac{1}{2}I_d + I_s sin^2(I_d) \text{ (Equation 12)}$$

Quand θ = 0°, tous les rayons polarisés perpendiculairement à la surface du module, sont coupés et il reste que la partie parallèle du diffus Cette position est appelée opposition de phase et permet le calcul de l'intensité diffuse selon l'équation (13) car le diffus n'est pas polarisé Cette mesure est très importante car elle permet de calibrer l'angle de polarisation. La disparition du faisceau spéculaire étant assez visible, il est possible de placer $\theta = 0°$ avec une précision de $\pm 2°$. On alors avec $I_\parallel$ la partie parallèle du diffus.

$$I_d = 2I_{\theta=0°} = 2I_\parallel \qquad \text{(Equation 13)}$$

Quand $\theta = 90°$, la partie polarisée perpendiculairement n'est pas coupée. La partie diffuse étant déjà connue, la détermination de la partie spéculaire est donnée par :

$$I_{spéculaire} = I_{\theta=90°} - I_{\theta=0°} \text{(Equation 14)}$$

*Deuxième mode de réalisation : Eclairage par lumière non polarisée*

Selon ce deuxième mode de réalisation, il s'agit d'introduire les coefficients de Fresnel $F_\parallel$ « $F_\perp$. Ils sont calculés en fonction de l'indice de réfraction n et l'angle d'incidence $\psi$ défini par rapport à la normale de la surface du module.

$I_s$ et $I_d$ sont les parties spéculaires et diffuse respectivement qui dépendent des valeurs mesurées.

$$I(\theta) = \frac{1}{2}I_d + \frac{F_\parallel cos^2(\theta) + F_\perp sin^2(\theta)}{F_\parallel + F_\perp}I_s \qquad \text{(Equation 15)}$$

Pour le cas non polarisé (np), les parties spéculaires et diffuses peuvent également être séparées, mais pas de manière directe comme dans le cas où la source est polarisée (équations 13 et 14). La détermination de $I_{S_{np}}$ et $I_{d_{np}}$ se fait en prenant l'équation 16 à $\theta = 90°$ et à $\theta = 0°$ et en soustrayant et sommant les expressions résultantes :

$$I_{S_{np}} = (I_{\theta=90°} - I_{\theta=0°})\frac{F_\parallel + F_\perp}{F_\parallel - F_\perp} \qquad \text{(Equation 16)}$$

$$I_{d_{np}} = I_{\theta=0°} + I_{\theta=90°} - I_{S_{np}} \qquad \text{(Equation 17)}$$

## Revendications

1. Procédé de caractérisation d'un module photovoltaïque (M), au moyen d'un dispositif de caractérisation d'un module photovoltaïque (M), le dispositif de caractérisation comprenant une source lumineuse (S) de manière à éclairer un objet (M, R), un spectromètre (SP) comprenant un axe optique d'acquisition (BB) et un filtre polarisant (F) comprenant un axe de polarisation (CC) et disposé devant le spectromètre (SP), la lumière réfléchie par l'objet (M, R) passant par le filtre polarisant (F) pour être capturée ensuite par le spectromètre (SP), et une unité (U) de traitement, le dispositif comprenant

   une première configuration dans lequel l'axe optique (CC) du filtre polarisant (F) forme un angle nul avec l'axe optique (BB) du spectromètre (SP),
   une deuxième configuration dans lequel l'axe optique (CC) du filtre polarisant (F) est perpendiculaire à l'axe optique (BB) du spectromètre (SP),
   le procédé comprenant les étapes suivantes mises en œuvre par l'unité (U) de traitement :

   a) acquisition (E1, E2), dans la première configuration et dans la deuxième configuration respectivement d'une intensité (I1, I2) réfléchie par un module (M) photovoltaïque éclairé par la source lumineuse (S) et mesurée par le spectromètre (SP) ;
   b) acquisition (E3, E4), dans la première configuration et dans la deuxième configuration respectivement d'une intensité (I3, I4) réfléchie par un réflecteur (R) de référence et mesurée par le spectromètre ;
   c) calcul (E5, E6) au moyen d'une relation entre les intensités acquises (I1, I2, I3, I4) dans chaque configuration d'une partie spéculaire de l'intensité diffusée par le module (M) photovoltaïque et d'une partie spéculaire de l'intensité diffusée par le réflecteur (R) de référence ;
   d) calcul (E7) au moyen d'une relation entre la partie spéculaire de l'intensité diffusée par le module (M) photovoltaïque, la partie spéculaire de l'intensité diffusée par le réflecteur de référence, et d'une réflectivité spectrale de référence du réflecteur de référence (R) d'une réflectivité spectrale du module (M) photovoltaïque, la réflectivité spectrale du module (M) photovoltaïque étant caractéristique d'un état d'usure du module (M) photovoltaïque.

2. Procédé selon la revendication 1, dans lequel à l'étape d) la réflectivité spectrale du module (M) photovoltaïque est obtenue par le produit entre le ratio entre la partie spéculaire de l'intensité diffusée par le module (M) photovoltaïque et l'intensité diffusée par le réflecteur de référence (R) et la réflectivité spectrale du réflecteur de référence (R).

3. Procédé selon l'une des revendications 1 à 2, dans lequel la source lumineuse (S) comprend une source principale (S1) à l'infini non polarisée et un filtre polarisant (Fp) amont configuré pour polariser la source principale (S1), la source lumineuse (S) éclairant le module (M) photovoltaïque et le réflecteur de référence étant polarisée, à l'étape c) la partie spéculaire $I_s$ module de l'intensité diffusée par le module (M) photovoltaïque est obtenue par $I_s$ module = $I_2 - I_1$ et la partie spéculaire $I_{s\,ref}$ diffusée par le réflecteur de référence est obtenue au moyen de la relation $I_{s\,ref} = I_4 - I_3$, $I_1$ et $I_3$ étant les intensités acquises dans la première configuration, $I_2$ et $I_4$ étant les intensités acquises dans la deuxième configuration.

4. Procédé selon l'une des revendications 1 à 2, dans lequel la source lumineuse comprend une source principale (S1) à l'infini non polarisée, à l'étape c) la partie spéculaire $I_{s\,module,np}$ de l'intensité diffusée par le module (M) photovoltaïque est obtenue par $I_{s\,module,np} = (I_2 - I_1).\dfrac{F_\parallel + F_\perp}{F_\parallel - F_\perp}$ et la partie spéculaire $I_{s\,ref,np}$ diffusée par le réflecteur de référence est obtenue au moyen de la relation $I_{s\,ref,np} = (I_4 - I_3).\dfrac{F_\parallel + F_\perp}{F_\parallel - F_\perp}$ avec $F_\parallel = \left|\dfrac{n^2 cos(\Psi) - a}{n^2 cos(\Psi) + a}\right|$ , $\Psi$

l'angle d'incidence sur le module (M) photovoltaïque ou sur le réflecteur (R) de référence, $a = \sqrt{n^2 - sin^2(\Psi)}$ et $n$ est l'indice de réfraction du module (M) photovoltaïque ou du réflecteur (R) de référence, $I_1$ et $I_3$ étant les intensités acquises dans la première configuration, $I_2$ et $I_4$ étant les intensités acquises dans la deuxième configuration.

5. Procédé selon l'une des revendications 1 à 5, dans lequel la source lumineuse (S) est positionné par rapport au module (M) photovoltaïque et par rapport au réflecteur de référence (R) avec un angle d'incidence $\Psi$ de la source inférieur ou égal à 15° par rapport à la normale (N) avec le module (M) ou réflecteur (R) de référence.

6. Procédé selon l'une des revendications 1 à 5, dans lequel entre l'étape a) et b), le procédé comprend a1) une étape (E8) de positionnement d'un réflecteur de référence (R) sur le module (M) photovoltaïque de sorte à être éclairé comme le module (M) photovoltaïque à l'étape a), le réflecteur (R) étant centré sur un point de mesure (O) localisé sur le module M photovoltaïque, la source lumineuse (S) comprenant un axe optique (AA) passant par ce point (O).

7. Dispositif de caractérisation d'un module (M) photovoltaïque comprenant une source lumineuse (S) de manière à éclairer un objet (M, R), un spectromètre (SP) comprenant un axe optique d'acquisition (BB) et un filtre polarisant (F) comprenant un axe de polarisation (CC) et disposé devant le spectromètre (S), la lumière réfléchie par l'objet (M, R) passant par le filtre polarisant (F) pour être capturée ensuite par le spectromètre (SP), et une unité (U) de traitement (U), le dispositif comprenant

- une première configuration dans laquelle l'axe optique forme un angle nul avec l'axe optique du spectromètre,
- une deuxième configuration dans laquelle l'axe optique est perpendiculaire à l'axe optique du spectromètre, les deuxième et quatrième intensités étant acquises dans la deuxième configuration, l'unité de traitement (U) étant configurée pour mettre en œuvre les étapes a), b) c) et d) du procédé selon l'une des revendications précédentes.

EP 4 753 145 A1

[Fig. 1]

EP 4 753 145 A1

[Fig. 2]

12

[Fig. 3]

[Fig. 4]

C    S1

V    S

( $I_{||} = I_{\perp}$ )

AA

1'

N

ψ

O    ψ

R    $I_{||}$

F    $I_{\perp}$

CC

BB    $I_{\perp}$

$I_{||}$

SP    U

[Fig. 5]

E1,E2 → E5

E0

E1-2

E7

E3,E4 → E6

[Fig. 6]

EP 4 753 145 A1

[Fig. 7]

[Fig. 8]

[Fig. 9]

[Fig. 10]

Europäisches
Patentamt

European
Patent Office

Office européen
des brevets

**RAPPORT DE RECHERCHE EUROPEENNE**

Numéro de la demande

EP 25 21 7869

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|-----------|------------------------------------------------------------------------------|------------------------|-------------------------------|
| X | EP 3 870 955 A1 (ENTPE [FR]) 1 septembre 2021 (2021-09-01) | 1,5-7 | INV. H02S50/15 |
| A | * alinéas [0003], [0038] - [0218]; revendications 1-3,11; figures 1-4 * | 2-4 | |
| | ----- | | |

DOMAINES TECHNIQUES RECHERCHES (IPC)

H02S

Le présent rapport a été établi pour toutes les revendications

| Lieu de la recherche | Date d'achèvement de la recherche | Examinateur |
|---------------------|-----------------------------------|-------------|
| La Haye | 1 avril 2026 | Boero, Mauro |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 21 7869

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-04-2026

| Document brevet cité au rapport de recherche | Date de publication | Membre(s) de la famille de brevet(s) | Date de publication |
|---|---|---|---|
| EP 3870955 A1 | 01-09-2021 | CA 3117399 A1 | 30-04-2020 |
| | | CN 113167728 A | 23-07-2021 |
| | | EP 3870955 A1 | 01-09-2021 |
| | | FR 3087891 A1 | 01-05-2020 |
| | | IL 282351 A | 31-05-2021 |
| | | JP 2022509387 A | 20-01-2022 |
| | | KR 20210079338 A | 29-06-2021 |
| | | US 2021389240 A1 | 16-12-2021 |
| | | WO 2020083924 A1 | 30-04-2020 |

EPO FORM P0460

Pour tout renseignement concernant cette annexe : voir Journal Officiel de l'Office européen des brevets, No.12/82